# EUROPEAN PATENT SPECIFICATION

(11) **EP 3 276 864 B1**
(45) Date of publication and mention of the grant of the patent: **27.10.2021**
(21) Application number: 15888836.2
(22) Date of filing: 17.04.2015
(51) Int. Cl.: H04L 1/18, H04L 29/06, H04L 12/52

(54) **INFORMATION FEEBACK METHOD, DEVICE, AND SYSTEM**
VERFAHREN, VORRICHTUNG UND SYSTEM FÜR INFORMATIONSFEEDBACK
PROCÉDÉ, DISPOSITIF ET SYSTÈME DE RÉTROACTION D'INFORMATIONS

(43) Date of publication of application: 31.01.2018
(73) Proprietor: Huawei Technologies Co., Ltd., Longgang District Shenzhen, Guangdong 518129 (CN)
(72) Inventor: LI, Yuanjie, Shenzhen Guangdong 518129 (CN); XUE, Lixia, Shenzhen Guangdong 518129 (CN); ZHOU, Yongxing, Shenzhen Guangdong 518129 (CN); QU, Bingyu, Shenzhen Guangdong 518129 (CN)
(74) Representative: Thun, Clemens
(86) International application number: PCT/CN2015/076885
(87) International publication number: WO 2016/165131

(56) References cited:
- EP-A2- 2 654 234
- WO-A1-2014/109571
- CN-A- 1 551 526
- CN-A- 102 342 054
- US-A1- 2015 023 228
- CATT: "ACK/NACKs transmission in UpPTS", 3GPP DRAFT; R1-080175, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080108, 8 January 2008 (2008-01-08), XP050108703, [retrieved on 2008-01-08]
- None

## Description

### TECHNICAL FIELD

The present invention relates to the field of communications technologies, and in particular, to an information feedback method, a device, and a system.

### BACKGROUND

A hybrid automatic repeat request (HARQ, hybrid automatic repeat request) is a technology that combines feedforward error correction and an automatic repeat request. HARQ retransmission is based on an acknowledgement (ACK, acknowledgement) or a negative acknowledgement (NACK, negative acknowledgement). A HARQ round-trip time difference is defined as a minimum value of a time interval between retransmitted data and the same data transmitted the previous time. For example, in a Long Term Evolution (LTE, long term evolution) frequency division duplex (FDD, frequency division duplexing) system, a HARQ round-trip time difference is 8 ms; in an LTE time division duplex (TDD, time division duplexing) system, a HARQ round-trip time difference requires a longer time.

With evolution of wireless communications technologies, a transmission delay is required to be as low as possible. For example, in the industry, an end-to-end transmission delay is required not to exceed 1 ms. In automated driving technologies, an end-to-end delay is required to be less than 5 ms. Apparently, a HARQ round-trip time difference that can be implemented in the prior art cannot meet the foregoing requirement.

US 2015/023228 A1 discloses an information feedback method applied to a TDD system. Here, a UE determines a duplex method of each serving cell for frequency-division duplexing (FDD) and time-division duplexing (TDD) carrier aggregation. The UE also determines physical downlink shared channel (PDSCH) Hybrid Automatic Repeat Request Acknowledgement/Negative Acknowledgement (HARQ-ACK) transmission timing for a serving cell. When a primary cell is a TDD cell, the PDSCH HARQ-ACK transmission timing for the serving cell is determined based on a downlink (DL) association set for the serving cell. The UE then sends PDSCH HARQ-ACK information based on the PDSCH HARQ-ACK transmission timing.

The document CATT: "ACK/NACIs transmission in UpPTS", 3GPP Draft; N1-080175, 3rd generation partnership prpject, shows details of a TDT operation, especially with regard to acknowledgement messages and non-acknowlegdement messages.

### SUMMARY

In view of this, embodiments of the present invention provide an information feedback method, a device, and a system, so as to reduce a communication transmission delay as much as possible.

Embodiments presented in the following, which are labelled as inventive embodiments, but do not fall within the scope of the invention defined by the independent claims, are to be understood as examples helpful for understanding the invention, but not as inventive embodiments.

The invention is defined by the appended claims.

According to the technical solutions provided in the embodiments of the present invention, in a TDD system, a feedback message is sent in a K^{th} subframe after a subframe for transmitting data, thereby reducing HARQ feedback complexity. In addition, an ACK or NACK feedback time is shortened by setting K, thereby greatly reducing a HARQ delay and meeting a transmission requirement for an ultralow delay. Meanwhile, by further improving a subframe structure, not only a processing time of a data receiving party is increased, but also a relatively short feedback delay can still be retained. Therefore, a desirable beneficial effect is achieved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a structural diagram of a subframe according to an embodiment of the present invention;
FIG. 2 is a flowchart of an information feedback method according to an embodiment of the present invention;
FIG. 3 is a structural diagram of an improved subframe of a first type according to an embodiment of the present invention;
FIG. 4 is a flowchart of another information feedback method according to an embodiment of the present invention;
FIG. 5 is a schematic structural diagram of user equipment according to an embodiment of the present invention;
FIG. 6 is a schematic structural diagram of an access network device according to an embodiment of the present invention;
FIG. 7 is a schematic structural diagram of another access network device according to an embodiment of the present invention;
FIG. 8 is a schematic structural diagram of another user equipment according to an embodiment of the present invention;
FIG. 9 is a schematic structural diagram of another user equipment according to an embodiment of the present invention;
FIG. 10 is a schematic structural diagram of another access network device according to an embodiment of the present invention;
FIG. 11 is a schematic structural diagram of another access network device according to an embodiment of the present invention; and
FIG. 12 is a schematic structural diagram of another user equipment according to an embodiment of the present invention.

### DESCRIPTION OF EMBODIMENTS

To make technical solutions of embodiments of the present invention clearer, the following clearly and completely describes the technical solutions in the embodiments of the present invention with reference to the accompanying drawings in the embodiments of the present invention. Apparently, the following embodiments are a part rather than all of the embodiments of the present invention.

The technical solutions provided in the embodiments of the present invention may be applied to various wireless communications networks, for example, Code Division Multiple Access (Code Division Multiple Access, CDMA), Frequency Division Multiple Access (Frequency Division Multiple Access, FDMA), orthogonal frequency division multiple access (Orthogonal frequency-division multiple access, OFDMA), single carrier frequency division multiple access (single carrier FDMA, SC-FDMA), and another network. The terms "network" and "system" can be interchanged with each other. A CDMA network may implement wireless technologies such as universal terrestrial radio access (universal terrestrial radio access, UTRA) and CDMA2000. The UTRA may include CDMA (WCDMA) or another variant of CDMA. CDMA2000 can cover Interim Standard (Interim Standard, IS) 2000 (IS-2000), IS-95, and IS-856 standards. An OFDMA network may implement wireless technologies such as evolved universal terrestrial radio access (evolved UTRA, E-UTRA, Ultra Mobile Broadband (ultra mobile broadband, UMB), and Flash OFDMA. The UTRA and the E-UTRA are UMTS and an evolved version of UMTS. 3GPP uses a new version of UMTS of E-UTRA in Long Term Evolution (long term evolution, LTE) and LTE Advanced (LTE Advanced, LTE-A). UTRA, E-UTRA, UMTS, LTE, LTE-A, and GSM are recorded and described in documents of the 3GPP standard organization. CDMA2000 and UMB are recorded and described in documents of the 3GPP2 standard organization. Technologies described in the embodiments of the present invention may also be applied to the foregoing wireless networks and wireless technologies.

A communications system provided in the embodiments of the present invention includes an access network device and user equipment (UE, user equipment). The access network device and the UE may be configured to implement methods provided in the following embodiments of the present invention. The access network device may provide communication coverage in a specific physical area to provide wireless access for the UE, so that the UE can access a network and perform communication. The access network device may be a device such as a base station, and may be a macro base station or a small cell. For example, in an LTE system, the access network device may be an eNodeB, or may be a small cell such as a home eNodeB (HeNB, home eNodeB), an AP, a micro base station (micro base station), or a pico base station (pico base station). In a UMTS system, the access network device may include a Node B (Node B) and a radio network controller (RNC, Radio Network Controller). In a GSM system, the access network device may include a base station controller (BSC, base station controller) and a base transceiver station (BTS, base transceiver station). The UEs may be distributed in an entire wireless network, and each UE may be still or moving. The UE may be referred to as a terminal (terminal), a mobile station (mobile station), a subscriber unit (subscriber unit), a station (station), or the like. The UE may be a cellular phone, a personal digital assistant (personal digital assistant, PDA) a wireless modem (modem), radio communications equipment, a handheld (handheld) device, a laptop computer (laptop computer), a cordless phone, a wireless local loop (wireless local loop, WLL), or the like.

A HARQ feedback mechanism of an LTE TDD system in the prior art is quite complex, different uplink-downlink configurations correspond to different HARQ delays (because each subframe other than few existing special subframes is unlikely to have both an uplink channel and a downlink channel), and a length of each subframe is 1 ms. Therefore, even a minimum delay reaches 4 ms. This is apparently unsatisfactory for an increasingly rigorous low transmission delay indicator in a communications system.

According to the technical solutions provided in the embodiments of the present invention, in a TDD system, a feedback message is sent in a K^{th} subframe after a subframe for transmitting data, thereby reducing HARQ feedback complexity. In addition, an ACK or NACK feedback time is shortened by setting K, thereby greatly reducing a HARQ delay and meeting a transmission requirement for an ultralow delay.

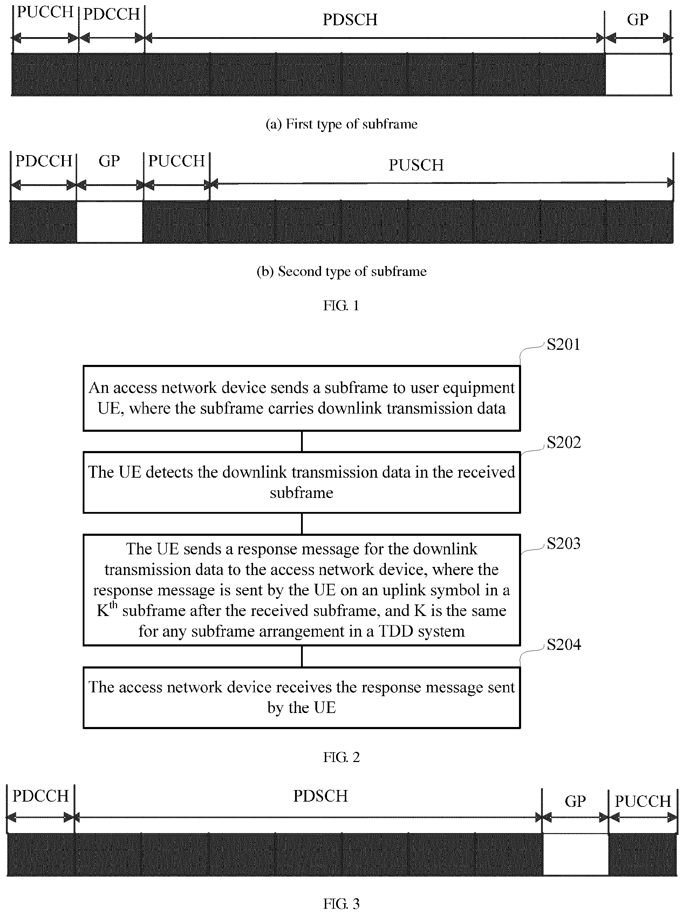

The technical solutions provided in the embodiments of the present invention are mainly applied to a TDD system, and in particular, to a system that performs data transmission by using a subframe structure shown in FIG. 1. The technical solutions may be applied to a single-carrier system and a multi-carrier system, and may also be applied to a high frequency (for example, a band higher than 6 GHz) communications system and a low frequency (for example, a band lower than 6 GHz) communications system.

FTG. 1 shows two types of subframe structures. The two types of subframe structures differ from an existing TDD subframe structure in that for the two types of subframe structures, each subframe includes an uplink symbol and a downlink symbol. That is, uplink transmission or downlink transmission may be performed in any subframe, or uplink transmission and downlink transmission may be performed in any subframe at the same time. The two types of subframe structures can shorten a length of each subframe. For example, each subframe may have only 0.2 ms. The two types of subframe structures make it possible to reduce a HARQ delay.

Optionally, the uplink symbol and the downlink symbol are orthogonal frequency division multiplexing (OFDM, orthogonal frequency division multiplex) symbols or single carrier frequency division multiple access (SC-FDMA, single carrier frequency division multiplex access) symbols.

It may be understood that a physical uplink control channel (PUCCH, physical uplink control channel) and a physical uplink shared channel (PUSCH, physical uplink shared channel) include uplink symbols; and a physical downlink control channel (PDCCH, physical downlink control channel) and a physical downlink shared channel (PDSCH, physical downlink shared channel) include downlink symbols.

FIG. 1(a) shows a first type of subframe, and the first type of subframe may include a PUCCH, a PDCCH, a PDSCH, and a guard period (GP, guard period). A time sequence of the PUCCH, the PDCCH, the PDSCH, and the GP from left to right may be shown in FIG. 1(a), and each block may represent a time of one symbol.

FIG. 1(b) shows a second type of subframe, and the second type of subframe may include a PDCCH, a GP, a PUCCH, and a PUSCH. A time sequence of the PUCCH, the PDCCH, the PDSCH, and the GP from left to right may be shown in FIG. 1(b), and each block may represent a time of one symbol.

Certainly, different arrangements may be performed on an uplink symbol, a downlink symbol, and a GP in a subframe according to a specific system requirement and a time sequence, provided that it is ensured that each subframe has an uplink symbol and a downlink symbol. This is not limited herein.

In addition, in a same subframe, no limitation is imposed on a quantity of consecutive uplink symbols in the subframe, a quantity of consecutive e downlink symbols in the subframe, and a quantity of symbols occupied by a GP in the subframe.

FIG. 2 is a flowchart of an information feedback method according to an embodiment of the present invention.

The method is applied to downlink data transmission, an access network device side sends downlink transmission data, and a UE side feeds back a response message indicating whether the downlink transmission data needs to be retransmitted. The method includes the following steps:
S201. An access network device sends a subframe to user equipment UE, where the subframe carries downlink transmission data.
S202. The UE detects the downlink transmission data in the received subframe.
S203. The UE sends a response message for the downlink transmission data to the access network device, where the response message is sent by the UE on an uplink symbol in a K^{th} subframe after the received subframe, and K is the same for any subframe arrangement in the TDD system.
S204. The access network device receives the response message sent by the UE.

Generally, signaling transmission or data transmission between the access network device and the UE is described by using a subframe as a time unit.

A manner of data exchange between the access network device and the UE may be that, when the access network device needs to transmit data to the UE in a downlink manner, the access network device sends, in a subframe at an n^{th} moment, downlink control signaling and downlink transmission data. The downlink control signaling is used to inform the UE that the access network device has downlink data to be transmitted. Optionally, the downlink control signaling includes: a downlink grant (DL Grant, downlink grant), which is used to indicate a time (that is, a subframe in which the downlink transmission data is located) for receiving the downlink transmission data by the UE, specific frequency information of the downlink transmission data or a modulation and coding scheme, and the like.

The UE attempts to receive the downlink transmission data according to the downlink control signaling. When the UE correctly receives the downlink transmission data, the UE needs to feed back an ACK to the access network device. When the UE does not correctly receive the downlink transmission data, the UE needs to feed back a NACK to the access network device. The ACK or the NACK is a response message indicating whether transmission data is correctly received.

In this embodiment of the present invention, the response message is sent in a fixed period after the access network device sends the downlink transmission data. For example, as previously described, when the access network device sends, in the subframe at the n^{th} moment, the downlink control signaling and the downlink transmission data, the UE may feed back the response message in an uplink manner in a subframe at an (n+K)^{th} moment. K is a positive integer. The technical solutions provided in this embodiment of the present invention are intended to shorten a feedback time of the response message. Therefore, a shorter fixed period indicates a better effect, that is, a smaller value of K indicates a better effect. In actual application, a value of K may be 1, 2, 3, or 4. When the UE feeds back the response message, the response message may be carried on an uplink symbol in a subframe. Optionally, the UE may use two types of subframes shown in FIG. 1 to feed back the response message to the access network device.

### (1) Feeding back the response message by using a first type of subframe

The response message may be carried on the first symbol in the first type of subframe, that is, the response message is sent to the access network device by using a PUCCH.

When a PUCCH of a subframe of this type is extended to multiple consecutive uplink symbols, the response message may be accordingly carried on the multiple uplink symbols.

### (2) Feeding back the response message by using a second type of subframe

The response message may be carried on any uplink symbol after a guard period in the second type of subframe or on at least two uplink symbols after the guard period. Optionally, the response message may be carried on the first uplink symbol after a GP in the second type of subframe, that is, the response message is sent to the access network device by using a PUCCH. Alternatively, the response message may be carried on all uplink symbols after the GP in the second type of subframe. In this case, the UE can use all the uplink symbols in a frequency division manner, that is, send the response message to the access network device by using a partial band set of all the uplink symbols, to implement sharing with another uplink channel, and improve coverage of the response message with accumulation of energy. Alternatively, the response message may be carried on a PUSCH of the second type of subframe. In this case, the UE may use the PUSCH in a frequency division manner, that is, send the response message to the access network device by using a partial band set of the PUSCH. Further, in a same cell, this manner may be used to carry a response message for a cell-edge user whereas a PUCCH may be used to carry a response message for a center user. In this way, resource conflicts between different UEs in a same cell are reduced. Alternatively, the response message may be carried on the last uplink symbol. In this case, a time for processing data by the UE can be increased.

In many communications systems, due to hardware condition limitations, a relatively long processing time is required after the UE receives data. In this case, it is possible that the UE cannot feed back the response message in the uplink manner in the subframe at the (n+K)^{th} moment. If a feedback is performed in an (n+K+1)^{th} subframe, however, a feedback delay is increased. Therefore, further, a time sequence between symbols in the first type of subframe may be adjusted. For example, FIG. 3 shows a structure of an improved subframe of the first type. As shown in FIG. 3, a PUCCH originally arranged foremost in a time sequence is placed after a GP, and a subframe structure of a PDCCH, a PDSCH, the GP, and the PUCCH in a time sequence from left to right is formed. In this way, when the UE needs to feed back the response message in an uplink manner in the (n+K)^{th} subframe to the access network device, different from the first type of subframe for which a feedback needs to be performed on the beginning PUCCH of the subframe, for the improved subframe of the first type, downlink transmission data may be processed on the PDCCH, PDSCH, and GP of the subframe and a feedback may be performed on the last PUCCH. Therefore, a processing time of the UE is appropriately increased, and a feedback delay can still remain unchanged.

After receiving the response message fed back in an uplink manner by the UE, the access network device can determine, according to a specific situation, whether to retransmit data in a downlink manner to the UE.

It should be noted that the subframe arrangement in S203 is a subframe ratio in a configuration manner, that is, an arrangement sequence, by time, of different subframes in one configuration period.

According to the technical solutions provided in this embodiment of the present invention, in a TDD system, a feedback message is sent in a K^{th} subframe after a subframe for transmitting data, thereby reducing HARQ feedback complexity. In addition, an ACK or NACK feedback time is shortened by setting K, thereby greatly reducing a HARQ delay and meeting a transmission requirement for an ultralow delay. Meanwhile, by further improving a subframe structure, not only a processing time of a data receiving party is increased, but also a relatively short feedback delay can still be retained. Therefore, a desirable beneficial effect is achieved.

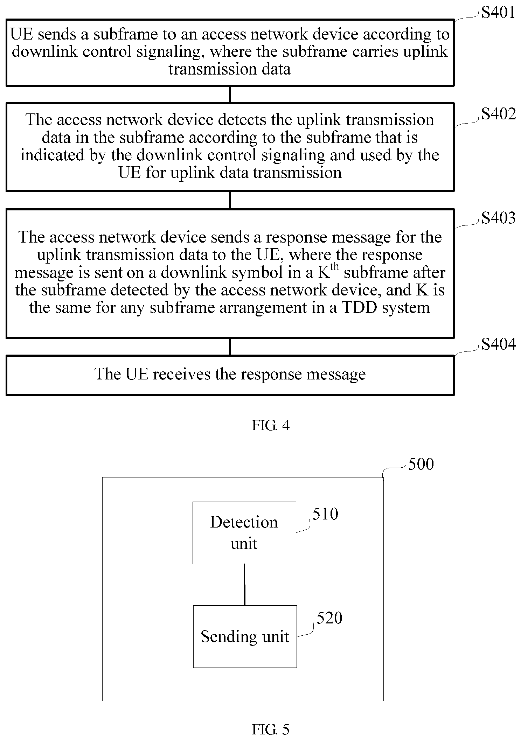

FIG. 4 is a flowchart of another information feedback method according to an embodiment of the present invention. The method is applied to uplink data transmission, UE sends uplink transmission data according to downlink control signaling of an access network device, and the access network device feeds back a response message indicating whether the uplink transmission data needs to be retransmitted. The method includes the following steps:
S401. UE sends a subframe to an access network device according to downlink control signaling, where the subframe carries uplink transmission data.
S402. The access network device detects the uplink transmission data in the subframe according to the subframe that is indicated by the downlink control signaling and used by the UE for uplink data transmission.
S403. The access network device sends a response message for the uplink transmission data to the UE, where the response message is sent on a downlink symbol in a K^{th} subframe after the subframe detected by the access network device, and K is the same for any subframe arrangement in the TDD system.
S404. The UE receives the response message.

Generally, signaling transmission or data transmission between the access network device and the UE is described by using a subframe as a time unit.

A manner of data exchange between the access network device and the UE may be that, when the UE needs to transmit data to the access network device in an uplink manner, the UE may first send scheduling request signaling to the access network device. Optionally, the UE may send the scheduling request signaling to the access network device by using a PUCCH. The scheduling request signaling may be a scheduling request indication (SRI, scheduling request indication), so as to inform the access network device that the UE has data to be transmitted and request the access network device to allocate a channel resource for uplink transmission.

When the channel resource can meet a requirement of the UE, the access network device may send the downlink control signaling to the UE. The downlink control signaling is used to instruct the UE to send uplink data. Optionally, the downlink control signaling includes: an uplink grant (UL Grant, uplink grant), which is used to indicate a time (that is, a subframe in which the uplink transmission data is located) for receiving the downlink transmission data by the UE, specific frequency information of the uplink transmission data or a modulation and coding scheme, and the like.

The UE sends, in a subframe at an n^{th} moment, the uplink transmission data to the access network device according to the downlink control signaling.

The access network device attempts to receive the uplink transmission data. When the access network device correctly receives the uplink transmission data, the access network device needs to feed back an ACK to the UE. When the access network device does not correctly receive the uplink transmission data, the access network device needs to feed back a NACK to the UE. The ACK or the NACK is a response message indicating whether transmission data is correctly received.

In this embodiment of the present invention, the response message is sent in the K^{th} subframe after the subframe that carries the uplink transmission data and is sent by the UE according to the downlink control signaling. For example, as previously described, when the UE sends, in the subframe at the n^{th} moment, the uplink transmission data, the access network device may feed back the response message in a downlink manner in a subframe at an (n+K)^{th} moment. K is a positive integer. The technical solutions provided in this embodiment of the present invention are intended to shorten a feedback time of the response message. Therefore, a shorter fixed period indicates a better effect, that is, a smaller value of K indicates a better effect. In practice, a value of K may be 1, 2, 3, or 4.

When the access network device feeds back the response message, the response message may be carried on a downlink symbol in a subframe. Optionally, the access network device may use two types of subframes shown in FIG. 1 to feed back the response message to the UE.

### (1) Feeding back the response message by using a first type of subframe

The response message may be carried on the second symbol (the first downlink symbol) in the first type of subframe, that is, the response message is sent to the UE by using a PDCCH, or the response message may be carried on at least two downlink symbols after the first uplink symbol in the first type of subframe. For example, the response message may be carried on all downlink symbols in the second type of subframe. In this case, the access network device may use all the downlink symbols in a frequency division manner, that is, send the response message to the UE by using a partial band set of all the downlink symbols, to implement sharing with another uplink channel, and improve coverage of the response message with accumulation of energy.

### (2) Feeding back the response message by using a second type of subframe

The response message may be carried on the first symbol in the second type of subframe, that is, the response message is sent to the access network device by using a PDCCH.

When a PDCCH of a subframe of this type is extended to multiple consecutive downlink symbols, the response message may be accordingly carried on the multiple downlink symbols.

After receiving the response message fed back in a downlink manner by the access network device, the UE can determine, according to a specific situation, whether to retransmit data in an uplink manner to the access network device.

It should be noted that the subframe arrangement in S403 is a subframe ratio in a configuration manner, that is, an arrangement sequence, by time, of different subframes in one configuration period.

According to the technical solutions provided in this embodiment of the present invention, in a TDD system, a feedback message is sent in a K^{th} subframe after a subframe for transmitting data, thereby reducing HARQ feedback complexity. In addition, an ACK or NACK feedback time is shortened by setting K, thereby greatly reducing a HARQ delay and meeting a transmission requirement for an ultralow delay.

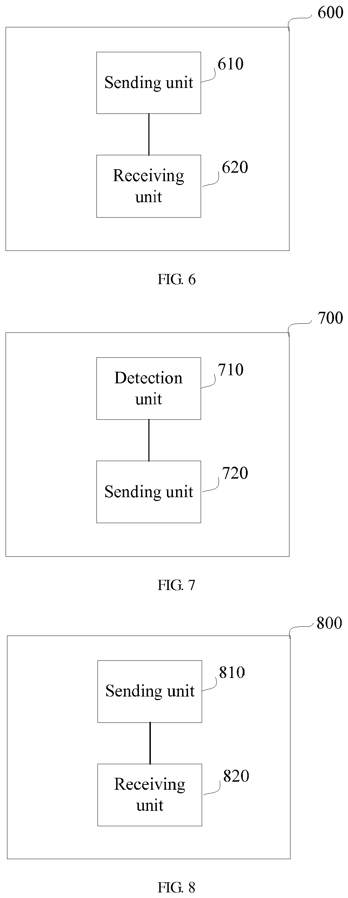

To perform an information feedback method provided in the embodiment shown in FIG. 2, an embodiment of the present invention provides user equipment 500 and an access network device 600, so as to perform downlink data transmission and an uplink feedback of a response message. As shown in FIG. 5, the user equipment includes a detection unit 510 and a sending unit 520. As shown in FIG. 6, the access network device includes a sending unit 610 and a receiving unit 620.

The detection unit 510 is configured to detect downlink transmission data in a received subframe.

The sending unit 520 is configured to send a response message for the downlink transmission data to the access network device, where the response message is sent by the UE on an uplink symbol in a K^{th} subframe after the received subframe, and K is the same for any subframe arrangement in a TDD system.

The sending unit 610 is configured to send the subframe to the user equipment UE, where the subframe carries the downlink transmission data.

The receiving unit 620 is configured to receive the response message sent by the UE.

Generally, signaling transmission or data transmission between the access network device 600 and the UE 500 is described by using a subframe as a time unit.

When the access network device 600 needs to transmit data to the UE in a downlink manner, the sending unit 610 may send, in a subframe at an n^{th} moment, downlink control signaling and downlink transmission data. The downlink control signaling is used to inform the UE that the access network device has downlink data to be transmitted. Optionally, the downlink control signaling includes: a downlink grant (DL Grant, downlink grant), which is used to indicate a time (that is, a subframe in which the downlink transmission data is located) for receiving the downlink transmission data by the UE, specific frequency information of the downlink transmission data or a modulation and coding scheme, and the like.

The UE 500 attempts to receive the downlink transmission data according to the downlink control signaling. When the detection unit 510 of the UE 500 detects the downlink transmission data and correctly receives the downlink transmission data, the sending unit 510 needs to feed back an ACK to the access network device 600. When the sending unit 510 does not detect the downlink transmission data or correctly receive the downlink transmission data, the UE needs to feed back a NACK to the access network device 600. The ACK or the NACK is a response message indicating whether transmission data is correctly received.

In this embodiment of the present invention, the response message is sent in a fixed period after the sending unit 610 sends the downlink transmission data. For example, as previously described, when the sending unit 610 of the access network device 600 sends, in the subframe at the n^{th} moment, the downlink control signaling and the downlink transmission data, the sending unit 520 of the UE 500 may feed back the response message in an uplink manner in a subframe at an (n+K)^{th} moment. K is a positive integer. The technical solutions provided in this embodiment of the present invention are intended to shorten a feedback time of the response message. Therefore, a shorter fixed period indicates a better effect, that is, a smaller value of K indicates a better effect. In actual application, a value of K may be 1, 2, 3, or 4.

When the UE 500 feeds back the response message, the response message may be carried on an uplink symbol in a subframe. Optionally, the UE 500 may use two types of subframes shown in FIG. 1 to feed back the response message to the access network device 600. A specific implementation is already described in detail in the invention embodiment shown in FIG. 2, and reference may be made thereto. Details are not described herein. After receiving the response message fed back in an uplink manner by the sending unit 520 of the UE 500, the receiving unit 620 of the access network device 600 can determine, according to a specific situation, whether to retransmit data in a downlink manner to the UE.

It should be noted that the subframe arrangement in this embodiment is a subframe ratio in a configuration manner, that is, an arrangement sequence, by time, of different subframes in one configuration period.

Optionally, functions of the access network device 600 and the UE 700 provided in this embodiment of the present invention may be cooperatively implemented by using a processor and a transceiver.

According to the technical solutions provided in this embodiment of the present invention, in a TDD system, a feedback message is sent in a K^{th} subframe after a subframe for transmitting data, thereby reducing HARQ feedback complexity. In addition, an ACK or NACK feedback time is shortened by setting K, thereby greatly reducing a HARQ delay and meeting a transmission requirement for an ultralow delay. Meanwhile, by further improving a subframe structure, not only a processing time of a data receiving party is increased, but also a relatively short feedback delay can still be retained. Therefore, a desirable beneficial effect is achieved.

To perform another information feedback method provided in the embodiment shown in FIG. 4, an embodiment of the present invention provides an access network device 700 and user equipment 800, so as to perform uplink data transmission and a downlink feedback of a response message. As shown in FIG. 7, the access network device 700 includes a detection unit 710 and a sending unit 720. As shown in FIG. 8, the user equipment 800 includes a sending unit 810 and a receiving unit 820.

The detection unit 710 is configured to detect uplink transmission data in a subframe according to the subframe that is indicated by downlink control signaling and used for uplink data transmission.

The sending unit 720 is configured to send, to the UE, the response message for the uplink transmission data, where the response message is sent on a downlink symbol in a K^{th} subframe after the subframe detected by the access network device, and K is the same for any subframe arrangement in the TDD system.

The sending unit 810 is configured to send the subframe to the access network device according to the downlink control signaling, where the subframe carries the uplink transmission data.

The receiving unit 820 is configured to receive the response message.

Generally, signaling transmission or data transmission between the UE 800 and the access network device 700 is described by using a subframe as a time unit.

When the UE 800 needs to transmit data to the access network device 700 in an uplink manner, the sending unit 810 may first send scheduling request signaling to the access network device. Optionally, the sending unit 810 may send the scheduling request signaling to the access network device by using a PUCCH. The scheduling request signaling may be a scheduling request indication (SRI, scheduling request indication), so as to inform the access network device that the UE has data to be transmitted and request the access network device to allocate a channel resource for uplink transmission.

When the channel resource can meet a requirement of the UE 800, the access network device 700 may send the downlink control signaling to the UE. The downlink control signaling is used to instruct the UE to send uplink data. Optionally, the downlink control signaling includes: an uplink grant (UL Grant, uplink grant), which is used to indicate a time (that is, a subframe in which the uplink transmission data is located) for receiving the downlink transmission data by the UE, specific frequency information of the uplink transmission data or a modulation and coding scheme, and the like.

The sending unit 810 of the UE 800 sends, in a subframe at an n^{th} moment, the uplink transmission data to the access network device 700 according to the downlink control signaling.

The access network device 700 attempts to receive the uplink transmission data. When the detection unit 710 of the access network device 700 detects the uplink transmission data and correctly receives the uplink transmission data, the sending unit 720 needs to feed back an ACK to the UE 800. When the detection unit 710 of the access network device 700 does not detect the uplink transmission data or correctly receive the uplink transmission data, the sending unit 720 needs to feed back a NACK to the UE 800. The ACK or the NACK is a response message indicating whether transmission data is correctly received.

In this embodiment of the present invention, the response message is sent in the K^{th} subframe after the subframe that carries the uplink transmission data and is sent by the UE according to the downlink control signaling. For example, as previously described, when the sending unit 810 of the UE 800 sends, in the subframe at the n^{th} moment, the uplink transmission data, the sending unit 720 of the access network device 700 may feed back the response message in a downlink manner in a subframe at an (n+K)^{th} moment. K is a positive integer. The technical solutions provided in this embodiment of the present invention arc intended to shorten a feedback time of the response message. Therefore, a shorter fixed period indicates a better effect, that is, a smaller value of K indicates a better effect. In practice, a value of K may be 1, 2, 3, or 4.

When the access network device 700 feeds back the response message, the response message may be carried on a downlink symbol in a subframe. Optionally, the access network device 700 may use two types of subframes shown in FIG. 1 to feed back the response message to the UE 800. A specific implementation is already described in detail in the invention embodiment shown in FIG. 4, and reference may be made thereto. Details are not described herein.

After receiving the response message that is fed back in a downlink manner by the access network device and indicates whether downlink data needs to be retransmitted, the UE 800 can determine, according to a specific situation, whether to retransmit data in an uplink manner to the access network device 700.

It should be noted that the subframe arrangement in this embodiment is a subframe ratio in a configuration manner, that is, an arrangement sequence, by time, of different subframes in one configuration period.

Optionally, functions of the access network device 700 and the UE 800 provided in this embodiment of the present invention may be cooperatively implemented by using a processor and a transceiver.

According to the technical solutions provided in this embodiment of the present invention, in a TDD system, a feedback message is sent in a K^{th} subframe after a subframe for transmitting data, thereby reducing HARQ feedback complexity. In addition, an ACK or NACK feedback time is shortened by setting K, thereby greatly reducing a HARQ delay and meeting a transmission requirement for an ultralow delay.

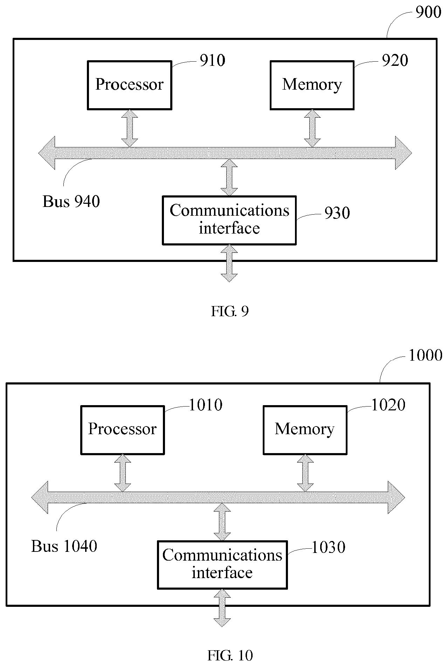

FIG. 9 is a schematic structural diagram of another user equipment 900 according to an embodiment of the present invention. As shown in FIG. 9, a mobility management device 900 includes a processor 910, a memory 920, a communications interface 930, and a bus 940. The memory 920 stores an execution instruction. When the device runs, the processor 910 communicates with the memory 920 by using the bus 940. The processor 910 receives information by using the communications interface 930, and performs, according to a computer instruction stored in the memory 920, the steps of the method disclosed in the method embodiment provided in FIG. 2 in the embodiments of the present invention.

FTG. 10 is a schematic structural diagram of another access network device 1000 according to an embodiment of the present invention. As shown in FIG. 10, a mobility management device 1000 includes a processor 1010, a memory 1020, a communications interface 1030, and a bus 1040. The memory 1020 stores an execution instruction. When the device runs, the processor 1010 communicates with the memory 1020 by using the bus 1040. The processor 1010 receives information by using the communications interface 1030, and performs, according to a computer instruction stored in the memory 1020, the steps of the method disclosed in the method embodiment provided in FIG. 2 in the embodiments of the present invention.

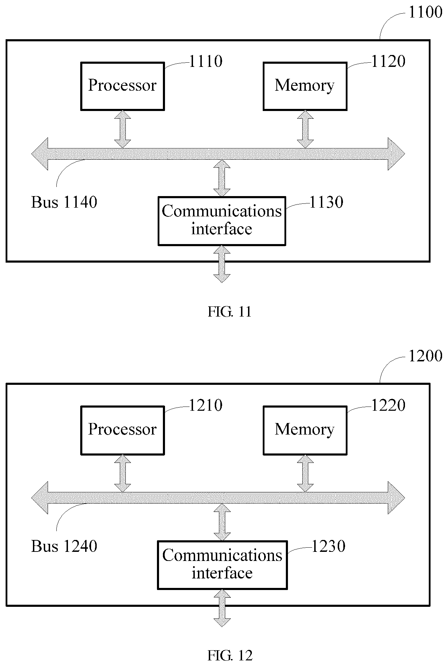

FTG. 11 is a schematic structural diagram of another access network device 1100 according to an embodiment of the present invention. As shown in FIG. 11, a mobility management device 1100 includes a processor 1110, a memory 1120, a communications interface 1130, and a bus 1140. The memory 1120 stores an execution instruction. When the device runs, the processor 1110 communicates with the memory 1120 by using the bus 1140. The processor 1110 receives information by using the communications interface 1130, and performs, according to a computer instruction stored in the memory 1120, the steps of the method disclosed in the method embodiment provided in FIG. 4 in the embodiments of the present invention.

FIG. 12 is a schematic structural diagram of another UE 1200 according to an embodiment of the present invention. As shown in FIG. 12, a mobility management device 1200 includes a processor 1210, a memory 1220, a communications interface 1230, and a bus 1240. The memory 1220 stores an execution instruction. When the device runs, the processor 1210 communicates with the memory 1220 by using the bus 1240. The processor 1210 receives information by using the communications interface 1230, and performs, according to a computer instruction stored in the memory 1220, the steps of the method disclosed in the method embodiment provided in FIG. 4 in the embodiments of the present invention.

The processor shown in FIG. 9 to FIG. 12 may be a general purpose processor, a digital signal processor (DSP), an application-specific integrated circuit (ASIC), a field programmable gate array (FPGA) or another programmable logical device, a discrete gate or transistor logic device, or a discrete hardware component. The general purpose processor may be a microprocessor, or the processor may be any conventional processor, or the like. Steps of the methods disclosed with reference to the embodiments of the present invention may be directly performed and accomplished by means of a hardware decoding processor, or may be performed and accomplished by using a combination of hardware and software modules in the decoding processor. Computer instructions may be located in a mature storage medium in the art, such as a random access memory, a flash memory, a read-only memory, a programmable read-only memory, an electrically erasable programmable memory, or a register. The storage medium is located in the memory, and a processor reads information in the memory and completes steps in methods in the embodiments in combination with hardware of the processor.

A person of ordinary skill in the art may understand and implement all procedures in the foregoing embodiments, and all the procedures can be implemented computer program instructions in combination with related hardware. In the solutions provided in the embodiments of the present invention, the "first", "second", and the like are intended only to distinguish different objects such as different types of subframes, and impose no substantial limitation.

In the foregoing embodiments, limitations of application scenarios and the like are only used to describe but not to limit specific technical solutions of the present invention. That is, modifications may be made to the technical solutions recorded in the foregoing embodiments, or equivalent substitutions may be made to the technical features in the foregoing embodiments. However, these modifications and substitutions do not depart from the protection scope of the present invention, which is defined by the appended claims.

## Claims

1. An information feedback method, applied to a time division duplex, TDD, system, wherein the method comprises:
detecting (S202), by user equipment, UE, downlink transmission data in a received subframe; and
sending (S203), by the UE, a response message for the downlink transmission data to an access network device,
wherein the response message is sent by the UE on an uplink symbol in a K^{th} subframe after the received subframe, and K is the same for any subframe arrangement in the TDD system, a subframe arrangement being an arrangement sequence, by time, of different subframes in one configuration period,
wherein K is a positive integer, and the response message is a hybrid automatic repeat request response message,
wherein the K^{th} subframe comprises an uplink symbol and a downlink symbol,
wherein the uplink symbol in the K^{th} subframe is located before the downlink symbol in the subframe, or
wherein the downlink symbol in the K^{th} subframe is located before the uplink symbol in the subframe, there are multiple uplink symbols in the subframe, a guard period exists between the downlink symbol and the uplink symbol in the subframe, and the response message is carried on any uplink symbol after the guard period or on at least two uplink symbols after the guard period, or
wherein the downlink symbol in the K^{th} subframe is located before the uplink symbol in the subframe, there is one uplink symbol in the subframe, and a guard period exists between the downlink symbol and the uplink symbol in the subframe.

2. User equipment, wherein the user equipment is applied to a time division duplex, TDD, system and comprises:
a detection unit(510), configured to detect downlink transmission data in a received subframe; and
a sending unit(520), configured to send a response message for the downlink transmission data to an access network device, wherein the response message is sent by the user equipment on an uplink symbol in a K^{th} subframe after the received subframe, and K is the same for any subframe arrangement in the TDD system, a subframe arrangement being an arrangement sequence, by time, of different subframes in one configuration period,
wherein K is a positive integer, and the response message is a hybrid automatic repeat request response message,
wherein the K^{th} subframe comprises an uplink symbol and a downlink symbol,
wherein the uplink symbol in the K^{th} subframe is located before the downlink symbol in the subframe, or
wherein the downlink symbol in the K^{th} subframe is located before the uplink symbol in the subframe, there are multiple uplink symbols in the subframe, a guard period exists between the downlink symbol and the uplink symbol in the subframe, and the response message is carried on any uplink symbol after the guard period or on at least two uplink symbols after the guard period, or
wherein the downlink symbol in the K^{th} subframe is located before the uplink symbol in the subframe, there is one uplink symbol in the subframe, and a guard period exists between the downlink symbol and the uplink symbol in the subframe.

3. An information feedback method, applied to a time division duplex, TDD, system, wherein the method comprises:
sending (S201), by an access network device, a subframe to user equipment, UE, wherein the subframe carries downlink transmission data; and
receiving (S204), by the access network device, a response message that is sent by the UE for the downlink transmission data, wherein the response message is sent on an uplink symbol in a K^{th} subframe after the subframe sent by the access network device, and K is the same for any subframe arrangement in the TDD system, a subframe arrangement being an arrangement sequence, by time, of different subframes in one configuration period,
wherein K is a positive integer, and the response message is a hybrid automatic repeat request response message,
wherein the K^{th} subframe comprises an uplink symbol and a downlink symbol,
wherein the uplink symbol in the K^{th} subframe is located before the downlink symbol in the subframe, or
wherein the downlink symbol in the K^{th} subframe is located before the uplink symbol in the subframe, there are multiple uplink symbols in the subframe, a guard period exists between the downlink symbol and the uplink symbol in the subframe, and the response message is carried on any uplink symbol after the guard period or on at least two uplink symbols after the guard period, or
wherein the downlink symbol in the K^{th} subframe is located before the uplink symbol in the subframe, there is one uplink symbol in the subframe, and a guard period exists between the downlink symbol and the uplink symbol in the subframe.

4. An access network device, wherein the access network device is applied to a time division duplex, TDD, system and comprises:
a sending unit(610), configured to send a subframe to user equipment, UE, wherein the subframe carries downlink transmission data; and
a receiving unit(620), configured to receive a response message that is sent by the UE for the downlink transmission data, wherein the response message is sent on an uplink symbol in a K^{th} subframe after the subframe sent by the access network device, and K is the same for any subframe arrangement in the TDD system, a subframe arrangement being an arrangement sequence, by time, of different subframes in one configuration period,
wherein K is a positive integer, and the response message is a hybrid automatic repeat request response message,
wherein the K^{th} subframe comprises an uplink symbol and a downlink symbol,
wherein the uplink symbol in the K^{th} subframe is located before the downlink symbol in the subframe, or
wherein the downlink symbol in the K^{th} subframe is located before the uplink symbol in the subframe, there are multiple uplink symbols in the subframe, a guard period exists between the downlink symbol and the uplink symbol in the subframe, and the response message is carried on any uplink symbol after the guard period or on at least two uplink symbols after the guard period, or
wherein the downlink symbol in the K^{th} subframe is located before the uplink symbol in the subframe, there is one uplink symbol in the subframe, and a guard period exists between the downlink symbol and the uplink symbol in the subframe.

## Patentansprüche

1. Verfahren für Informationsfeedback, angewandt auf ein Zeitduplex-, TDD-, System, wobei das Verfahren umfasst:
Erkennen (S202) von Downlink-Übertragungsdaten in einem empfangenen Teilframe durch ein Benutzergerät UE; und
Senden (S203) einer Antwortnachricht für die Downlink-Übertragungsdaten an eine Zugangsnetzwerkvorrichtung durch das UE,
wobei die Antwortnachricht durch das UE auf einem Uplink-Symbol in einem K-ten Teilframe nach dem empfangenen Teilframe gesendet wird und K für jede Teilframeanordnung im TDD-System gleich ist, wobei eine Teilframeanordnung eine zeitliche Anordnungssequenz von verschiedenen Teilframes in einer Konfigurationsperiode ist,
wobei K eine positive ganze Zahl ist und die Antwortnachricht eine hybride automatische Wiederholungsanforderungsantwortnachricht ist,
wobei der K-te Teilframe ein Uplink-Symbol und ein Downlink-Symbol umfasst,
wobei sich das Uplink-Symbol im K-ten Teilframe vor dem Downlink-Symbol im Teilframe befindet, oder
wobei sich das Downlink-Symbol im K-ten Teilframe vor dem Uplink-Symbol im Teilframe befindet, mehrere Uplink-Symbole im Teilframe vorhanden sind, eine Schutzperiode zwischen dem Downlink-Symbol und dem Uplink-Symbol im Teilframe vorhanden ist und die Antwortnachricht auf einem beliebigen Uplink-Symbol nach der Schutzperiode oder auf mindestens zwei Uplink-Symbolen nach der Schutzperiode getragen wird, oder
wobei das Downlink-Symbol im K-ten Teilframe vor dem Uplink-Symbol im Teilframe liegt, ein Uplink-Symbol im Teilframe vorhanden ist und eine Schutzperiode zwischen dem Downlink-Symbol und dem Uplink-Symbol im Teilframe vorhanden ist.

2. Benutzergerät, wobei das Benutzergerät auf ein Zeitduplex-, TDD-, System angewandt wird und umfasst:
eine Erkennungseinheit (510), die dazu konfiguriert ist, Downlink-Übertragungsdaten in einem empfangenen Teilframe zu erkennen; und
eine Sendeeinheit (520), die dazu konfiguriert ist, eine Antwortnachricht für die Downlink-Übertragungsdaten an eine Zugangsnetzwerkvorrichtung zu senden, wobei die Antwortnachricht durch das Benutzergerät auf einem Uplink-Symbol in einem K-ten Teilframe nach dem empfangenen Teilframe gesendet wird und K für jede Teilframeanordnung im TDD-System gleich ist, wobei eine Teilframeanordnung eine zeitliche Anordnungssequenz von verschiedenen Teilframes in einer Konfigurationsperiode ist,
wobei K eine positive ganze Zahl ist und die Antwortnachricht eine hybride automatische Wiederholungsanforderungsantwortnachricht ist,
wobei der K-te Teilframe ein Uplink-Symbol und ein Downlink-Symbol umfasst,
wobei sich das Uplink-Symbol im K-ten Teilframe vor dem Downlink-Symbol im Teilframe befindet, oder
wobei sich das Downlink-Symbol im K-ten Teilframe vor dem Uplink-Symbol im Teilframe befindet, mehrere Uplink-Symbole im Teilframe vorhanden sind, eine Schutzperiode zwischen dem Downlink-Symbol und dem Uplink-Symbol im Teilframe vorhanden ist und die Antwortnachricht auf einem beliebigen Uplink-Symbol nach der Schutzperiode oder auf mindestens zwei Uplink-Symbolen nach der Schutzperiode getragen wird, oder
wobei das Downlink-Symbol im K-ten Teilframe vor dem Uplink-Symbol im Teilframe liegt, ein Uplink-Symbol im Teilframe vorhanden ist und eine Schutzperiode zwischen dem Downlink-Symbol und dem Uplink-Symbol im Teilframe vorhanden ist.

3. Verfahren für Informationsfeedback, angewandt auf ein Zeitduplex-, TDD-, System, wobei das Verfahren umfasst:
Senden (S201) eines Teilframes an ein Benutzergerät, UE, durch eine Zugangsnetzwerkvorrichtung, wobei der Teilframe Downlink-Übertragungsdaten enthält; und
Empfangen (S204) einer durch das UE für die Downlink-Übertragungsdaten gesendeten Antwortnachricht durch die Zugangsnetzwerkvorrichtung, wobei die Antwortnachricht auf einem Uplink-Symbol in einem K-ten Teilframe nach dem durch die Zugangsnetzwerkvorrichtung gesendeten Teilframe gesendet wird, und K für jede Teilframeanordnung im TDD-System gleich ist, wobei eine Teilframeanordnung eine zeitliche Anordnungssequenz von verschiedenen Teilframe in einer Konfigurationsperiode ist,
wobei K eine positive ganze Zahl ist und die Antwortnachricht eine hybride automatische Wiederholungsanforderungsantwortnachricht ist,
wobei der K-te Teilframe ein Uplink-Symbol und ein Downlink-Symbol umfasst,
wobei sich das Uplink-Symbol im K-ten Teilframe vor dem Downlink-Symbol im Teilframe befindet, oder
wobei sich das Downlink-Symbol im K-ten Teilframe vor dem Uplink-Symbol im Teilframe befindet, mehrere Uplink-Symbole im Teilframe vorhanden sind, eine Schutzperiode zwischen dem Downlink-Symbol und dem Uplink-Symbol im Teilframe vorhanden ist und die Antwortnachricht auf einem beliebigen Uplink-Symbol nach der Schutzperiode oder auf mindestens zwei Uplink-Symbolen nach der Schutzperiode getragen wird, oder
wobei das Downlink-Symbol im K-ten Teilframe vor dem Uplink-Symbol im Teilframe liegt, ein Uplink-Symbol im Teilframe vorhanden ist und eine Schutzperiode zwischen dem Downlink-Symbol und dem Uplink-Symbol im Teilframe vorhanden ist.

4. Zugangsnetzwerkvorrichtung, wobei die Zugangsnetzwerkvorrichtung an ein Zeitduplex-, TDD-, System angelegt ist und umfasst:
eine Sendeeinheit (610), die dazu konfiguriert ist, einen Teilframe an ein Benutzergerät, UE, zu senden, wobei der Teilframe Downlink-Übertragungsdaten trägt; und
eine Empfangseinheit (620), die dazu konfiguriert ist, eine durch das UE für die Downlink-Übertragungsdaten gesendete Antwortnachricht zu empfangen, wobei die Antwortnachricht auf einem Uplink-Symbol in einem K-ten Teilframe nach dem durch die Zugangsnetzwerkvorrichtung gesendeten Teilframe gesendet wird, und K für jede Teilframeanordnung im TDD-System gleich ist, wobei eine Teilframeanordnung eine zeitliche Anordnungssequenz von verschiedenen Teilframes in einer Konfigurationsperiode ist,
wobei K eine positive ganze Zahl ist und die Antwortnachricht eine hybride automatische Wiederholungsanforderungsantwortnachricht ist,
wobei der K-te Teilframe ein Uplink-Symbol und ein Downlink-Symbol umfasst,
wobei sich das Uplink-Symbol im K-ten Teilframe vor dem Downlink-Symbol im Teilframe befindet, oder
wobei sich das Downlink-Symbol im K-ten Teilframe vor dem Uplink-Symbol im Teilframe befindet, mehrere Uplink-Symbole im Teilframe vorhanden sind, eine Schutzperiode zwischen dem Downlink-Symbol und dem Uplink-Symbol im Teilframe vorhanden ist und die Antwortnachricht auf einem beliebigen Uplink-Symbol nach der Schutzperiode oder auf mindestens zwei Uplink-Symbolen nach der Schutzperiode getragen wird, oder
wobei das Downlink-Symbol im K-ten Teilframe vor dem Uplink-Symbol im Teilframe liegt, ein Uplink-Symbol im Teilframe vorhanden ist und eine Schutzperiode zwischen dem Downlink-Symbol und dem Uplink-Symbol im Teilframe vorhanden ist.

## Revendications

1. Procédé de rétroaction d'informations, appliqué à un système de duplexage par répartition dans le temps, DRT, le procédé comprenant :
la détection (S202), par un équipement utilisateur, UE, de données de transmission de liaison descendante dans une sous-trame reçue ; et
l'envoi (S203), par l'UE, d'un message de réponse pour les données de transmission de liaison descendante à un dispositif de réseau d'accès,
dans lequel le message de réponse est envoyé par l'UE sur un symbole de liaison montante dans une K^{ième} sous-trame après la sous-trame reçue, et K est identique pour un quelconque agencement de sous-trame dans le système DRT, un agencement de sous-trame étant une séquence d'agencement, chronologiquement, de différentes sous-trames dans une période de configuration,
dans lequel K est un nombre entier positif, et le message de réponse est un message de réponse à une requête automatique de répétition hybride,
dans lequel la K^{ième} sous-trame comprend un symbole de liaison montante et un symbole de liaison descendante,
dans lequel le symbole de liaison montante dans la K^{ième} sous-trame est situé avant le symbole de liaison descendante dans la sous-trame, ou
dans lequel le symbole de liaison descendante dans la K^{ième} sous-trame est situé avant le symbole de liaison montante dans la sous-trame, il existe de multiples symboles de liaison montante dans la sous-trame, une période de garde existe entre le symbole de liaison descendante et le symbole de liaison montante dans la sous-trame, et le message de réponse est porté sur un quelconque symbole de liaison montante après la période de garde ou sur au moins deux symboles de liaison montante après la période de garde, ou
dans lequel le symbole de liaison descendante dans la K^{ième} sous-trame est situé avant le symbole de liaison montante dans la sous-trame, il existe un symbole de liaison montante dans la sous-trame, et une période de garde existe entre le symbole de liaison descendante et le symbole de liaison montante dans la sous-trame.

2. Équipement utilisateur, l'équipement utilisateur étant appliqué à un système de duplexage par répartition dans le temps, DRT et comprenant :
une unité de détection (510), configurée pour détecter des données de transmission de liaison descendante dans une sous-trame reçue ; et
une unité d'envoi (520), configurée pour envoyer un message de réponse pour les données de transmission de liaison descendante à un dispositif de réseau d'accès, le message de réponse étant envoyé par l'équipement utilisateur sur un symbole de liaison montante dans une K^{ième} sous-trame après la sous-trame reçue, et K étant identique pour un quelconque agencement de sous-trame dans le système DRT, un agencement de sous-trame étant une séquence d'agencement, chronologiquement, de différentes sous-trames dans une période de configuration,
dans lequel K est un nombre entier positif, et le message de réponse est un message de réponse à une requête automatique de répétition hybride,
dans lequel la K^{ième} sous-trame comprend un symbole de liaison montante et un symbole de liaison descendante,
dans lequel le symbole de liaison montante dans la K^{ième} sous-trame est situé avant le symbole de liaison descendante dans la sous-trame, ou
dans lequel le symbole de liaison descendante dans la K^{ième} sous-trame est situé avant le symbole de liaison montante dans la sous-trame, il existe de multiples symboles de liaison montante dans la sous-trame, une période de garde existe entre le symbole de liaison descendante et le symbole de liaison montante dans la sous-trame, et le message de réponse est porté sur un quelconque symbole de liaison montante après la période de garde ou sur au moins deux symboles de liaison montante après la période de garde, ou
dans lequel le symbole de liaison descendante dans la K^{ième} sous-trame est situé avant le symbole de liaison montante dans la sous-trame, il existe un symbole de liaison montante dans la sous-trame, et une période de garde existe entre le symbole de liaison descendante et le symbole de liaison montante dans la sous-trame.

3. Procédé de rétroaction d'informations, appliqué à un système de duplexage par répartition dans le temps, DRT, le procédé comprenant :
l'envoi (S201), par un dispositif de réseau d'accès, d'une sous-trame à un équipement utilisateur, UE, la sous-trame portant des données de transmission de liaison descendante ; et
la réception (S204), par le dispositif de réseau d'accès, d'un message de réponse qui est envoyé par l'UE pour les données de transmission de liaison descendante, le message de réponse étant envoyé sur un symbole de liaison montante dans une K^{ième} sous-trame après la sous-trame envoyée par le dispositif de réseau d'accès, et K étant identique pour un quelconque agencement de sous-trame dans le système DRT, un agencement de sous-trame étant une séquence d'agencement, chronologiquement, de différentes sous-trames dans une période de configuration,
dans lequel K est un nombre entier positif, et le message de réponse est un message de réponse à une requête automatique de répétition hybride,
dans lequel la K^{ième} sous-trame comprend un symbole de liaison montante et un symbole de liaison descendante,
dans lequel le symbole de liaison montante dans la K^{ième} sous-trame est situé avant le symbole de liaison descendante dans la sous-trame, ou
dans lequel le symbole de liaison descendante dans la K^{ième} sous-trame est situé avant le symbole de liaison montante dans la sous-trame, il existe de multiples symboles de liaison montante dans la sous-trame, une période de garde existe entre le symbole de liaison descendante et le symbole de liaison montante dans la sous-trame, et le message de réponse est porté sur un quelconque symbole de liaison montante après la période de garde ou sur au moins deux symboles de liaison montante après la période de garde, ou
dans lequel le symbole de liaison descendante dans la K^{ième} sous-trame est situé avant le symbole de liaison montante dans la sous-trame, il existe un symbole de liaison montante dans la sous-trame, et une période de garde existe entre le symbole de liaison descendante et le symbole de liaison montante dans la sous-trame.

4. Dispositif de réseau d'accès, le dispositif de réseau d'accès étant appliqué à un système de duplexage par répartition dans le temps, DRT et comprenant :
une unité d'envoi (610), configurée pour envoyer une sous-trame à un équipement utilisateur, UE, la sous-trame portant des données de transmission de liaison descendante ; et
une unité de réception (620), configurée pour recevoir un message de réponse qui est envoyé par l'UE pour les données de transmission de liaison descendante, le message de réponse étant envoyé sur un symbole de liaison montante dans une K^{ième} sous-trame après la sous-trame envoyée par le dispositif de réseau d'accès, et K étant identique pour un quelconque agencement de sous-trame dans le système DRT, un agencement de sous-trame étant une séquence d'agencement, chronologiquement, de différentes sous-trames dans une période de configuration,
dans lequel K est un nombre entier positif, et le message de réponse est un message de réponse à une requête automatique de répétition hybride,
dans lequel la K^{ième} sous-trame comprend un symbole de liaison montante et un symbole de liaison descendante,
dans lequel le symbole de liaison montante dans la K^{ième} sous-trame est situé avant le symbole de liaison descendante dans la sous-trame, ou
dans lequel le symbole de liaison descendante dans la K^{ième} sous-trame est situé avant le symbole de liaison montante dans la sous-trame, il existe de multiples symboles de liaison montante dans la sous-trame, une période de garde existe entre le symbole de liaison descendante et le symbole de liaison montante dans la sous-trame, et le message de réponse est porté sur un quelconque symbole de liaison montante après la période de garde ou sur au moins deux symboles de liaison montante après la période de garde, ou
dans lequel le symbole de liaison descendante dans la K^{ième} sous-trame est situé avant le symbole de liaison montante dans la sous-trame, il existe un symbole de liaison montante dans la sous-trame, et une période de garde existe entre le symbole de liaison descendante et le symbole de liaison montante dans la sous-trame.
